# EUROPEAN PATENT SPECIFICATION

(11) **EP 4 459 785 B1**
(45) Date of publication and mention of the grant of the patent: **29.10.2025**
(21) Application number: 22915944.7
(22) Date of filing: 23.12.2022
(51) Int. Cl.: H01G 11/14, H01M 50/578, H01G 11/16, H01G 11/74, H01G 11/78, H01M 50/107, H01M 50/545, H01M 50/547, H01M 50/55, H01M 50/559, H01M 50/56, H01M 50/583, H01M 50/588, H01M 50/593

(54) **POWER STORAGE DEVICE**
ENERGIESPEICHERVORRICHTUNG
DISPOSITIF DE STOCKAGE D'ÉNERGIE

(30) Priority: 28.12.2021 JP 2021214507
(43) Date of publication of application: 06.11.2024
(73) Proprietor: Panasonic Intellectual Property Management Co., Ltd., Kadoma-shi, Osaka 571-0057 (JP)
(72) Inventor: SAKAMOTO, Shinichi, Osaka 571-0057 (JP); GESHI, Shinya, Osaka 571-0057 (JP)
(74) Representative: Eisenführ Speiser
(86) International application number: PCT/JP2022/047581
(87) International publication number: WO 2023/127721

(56) References cited:
- WO-A1-2011/145608
- WO-A1-2016/027673
- WO-A1-2020/137372
- WO-A1-2021/124995
- WO-A1-2021/153439
- JP-A- 2000 331 671
- JP-A- 2013 535 791
- JP-A- 2018 511 155
- US-A1- 2011 008 654
- US-A1- 2018 198 108
- US-A1- 2022 376 332
- US-A1- 2023 048 822

## Description

### TECHNICAL FIELD

The present disclosure relates to a power storage device having a current interrupting function.

### BACKGROUND

US 2011/008654 A1 discloses a cap assembly loaded on an open upper end of a cylindrical container of a battery in which an electrode assembly is mounted in the cylindrical container, the cap assembly including a safety vent having a predetermined notch configured to rupture by high-pressure gas generated in the battery, a current interruptive device coupled to a bottom of the safety vent by welding for interrupting current when internal pressure of the battery increases, and a current interruptive device gasket for surrounding an outer circumference of the current interruptive device, wherein the current interruptive device includes two or more through holes for gas discharge, the through holes being formed such that the sum of areas of the through holes is equal to 20% to 50% of an entire area of the current interruptive device. When high-pressure gas is generated in the battery, the cap assembly effectively interrupts current and rapidly discharges the gas.

US 2018/0198108 A1 discloses a cap assembly loaded on an open upper end of a metal battery can of a cylindrical secondary battery. The cap assembly includes a top cap located at the uppermost end of the cap assembly to constitute a positive electrode terminal having an outward protruding structure, a safety vent located under the top cap and electrically connected to the top cap via a safety vent for discharging gas, a current interrupt device configured such that a portion of the upper surface of the current interrupt device is connected to the safety vent and a portion of the lower surface of the current interrupt device is connected to an electrode lead of an electrode assembly, the portion of the current interrupt device connected to the safety vent being configured to rupture when high pressure is generated in the battery, whereby the current interrupt device is separated from the safety vent to interrupt the flow of current, and a current interrupt device (CID) gasket coupled to the current interrupt device so as to wrap an outer circumferential part of the current interrupt device excluding portions of the current interrupt device that are connected to electrode tabs and the safety vent in order to secure the electrical insulation property of the current interrupt device, wherein an insulative coating layer made of an electrically insulative material is formed on the outer circumferential part of the current interrupt device.

WO 2021/124995 A1 relates to a cylindrical battery, and the objective of the disclosure of WO 2021/124995 A1 is to reduce the number of components of a sealing body that closes one end of an outer can, by providing a metal component, which is a constituent of the sealing body, with an electric current blocking function. A cylindrical battery includes: an outer can in the shape of a bottomed cylinder; a sealing body which closes one end of the outer can; an electrode body disposed inside the outer can; and an insulating resin component disposed between the outer can and the sealing body. The sealing body includes a metal component which is connected to a positive electrode lead that leads out from the electrode body. The metal component has an easily broken portion radially inward of the connecting portion of the metal component and the positive electrode lead, and is crimp-secured by means of the outer can, with the resin component interposed therebetween. The resin component is crimp-secured by means of the metal component, on the radially inner side of the metal component relative to the easily broken portion.

A power storage device according to WO 2021/153439 A1 includes: a case; a power storage element disposed in the case; a lead connected to an electrode of the power storage element; and a sealing member for sealing an opening of the case. The sealing member includes a gasket having a disk-like base part, and a conductive sealing plate. The base part is disposed between the sealing plate and the power storage element. A through-hole is formed in the base part. A protrusion of the sealing plate is inserted into the through-hole. The protrusion of the sealing plate and the lead are connected. The connection between the protrusion and the lead is disconnected as the protrusion is displaced in the direction going away from the lead in response to a rise in internal pressure inside the case.

In order to provide an electric energy storage device capable of passing more electric current than conventional devices and surely cutting-off the electric current at a specified pressure when a pressure inside a can is increased, it is proposed in JP 2000/331671 A that the electric energy storage device is provided with a bellows formed on a part of a closed container and a pull-top type electric current cutting-off mechanism interposed in an electric current passage from one of either a positive or a negative electrode composing an electrode body to the other terminal part. The electric current cutting-off mechanism is provided with a pull tab to be pulled up in accompany with displacement of the bellows, and downward pressure exhibited by a tip of the pull tab ruptures a disc-like safety valve along a peripheral groove to cut off the electric current passage.

JP 2013/535791 A relates to a pouch-type secondary battery having improved stability, and more particularly to a pouch-type secondary battery which is designed such that the shape of the pouch is changeable to disconnect the connection parts between an electrode lead and an electrode tab when the internal pressure of the pouch rises due to excessive charging or the like, and a battery pack including the same. This may increase the lifetime and stability of a pouch-type secondary battery, without the need for additional materials, devices, or the like in the manufacturing of the secondary battery, by fundamentally interrupting the current flow when gas is generated in the secondary battery, and JP 2013/535791 A can provide a pouch-type secondary battery capable of being low cost, light weight, and a battery that is easily changeable in shape, etc.

JP 2018/511155 A provides a pouch-type secondary battery comprising an electrode assembly equipped with an electrode tab, an electrode lead connected to the electrode tab, a pouch housing accommodating and sealing the electrode assembly such that the electrode lead is exposed partly and equipped with a sealing zone at the edge thereof, a first sealant interposed between the top surface of the electrode lead and the inner surface of the pouch housing and a second sealant interposed between the lower surface of the electrode lead and the inner surface of the pouch housing, wherein the electrode lead includes a joint portion joined to the electrode tab, a terminal portion exposed to the outside of the pouch housing and a fuse portion between the joint portion and the terminal portion, the fuse portion includes a separating groove separated from the sealing zone toward the joint portion and including at least a horizontal slit which is in parallel to the width direction of the electrode lead and a breaking portion disposed more inwardly than the sealing zone and connected to the separating groove for separating the terminal portion from the joint portion and the shapes of the first sealant and the second sealant are different from each other such that, when the pressure inside the secondary battery is increased, the stress applied to the pouch housing is in opposite directions at the top surface and the lower surface of the electrode lead so that the breaking portion breaks.

The purpose of the disclosure of WO 2020/137372 A1 is to reduce the possibility of the generation of reconduction after the electrical conduction between a valve body and a metal plate has been disconnected. A sealed battery that is an example of WO 2020/137372 A1 is provided with: a battery case that includes a cylindrical exterior can having a bottom and an opening sealing body that closes an opening of the outer can; a gasket that is arranged between the exterior can and the opening sealing body; and an electrode body that is contained inside the battery case. The opening sealing body has: a metal plate that includes an annular part to which an electrode lead is electrically connected, and a disconnecting part that is separated from the annular part when the inner pressure of the battery case exceeds a predetermined threshold; a valve body that is arranged further to the outside of the battery case than the metal plate; and an insulating plate that is arranged between the metal plate and the valve body and insulates portions other than a connecting portion of the metal plate and the valve body. The insulating plate or the gasket is provided with an elastic deformation part that deforms in the direction of the valve body when the disconnecting part of the metal plate is separated from the annular part.

WO 2016/027673 A1 discloses a battery using a flexible outer casing, wherein electric current is reliably interrupted when the temperature is increased due to the occurrence of abnormality, thereby preventing excessive heat generation. A battery according to WO 2016/027673 A1 comprises: a battery element; a pair of first terminals that are electrically connected to the battery element; a flexible outer casing; and a second terminal. The outer casing is divided into a first chamber in which the battery element is sealed and a second chamber which is adjacent to the first chamber. The second terminal is led out from the second chamber to the outside of the outer casing so that one first terminal is able to be electrically connected to an external wiring line through the second chamber. A gas generation material which generates a gas at a temperature that is not less than a predetermined temperature is sealed in the second chamber.

According to WO 2011/145608 A1 a battery unit housed in a case is constructed from a single laminated body, or a plurality of laminated bodies connected in series, comprising a plurality of bipolar electrodes that have been laminated with electrolyte layers positioned therebetween. One surface of a positive-pole collector plate and a negative-pole collector plate is joined to the inner peripheral surface of the case and another surface thereof is joined to one end of the battery unit, and the positive-pole collector plate and the negative-pole collector plate both extend outside of the case. A cutoff mechanism is provided to cut off the electrical connection between the positive-pole collector plate and the negative-pole collector plate established by way of the battery unit, in accordance with elongation deformations of the case. The current path in the bipolar secondary battery is interrupted when a short-circuit current is generated, to protect the bipolar secondary battery from the short-circuit current.

In an electric vehicle or the like, it is necessary to mount a large-capacity battery, and the number of batteries that make up one unit is also large. When an abnormality occurs in an individual battery, the internal pressure may increase due to gas generation. For this reason, it is usual that a mechanism for releasing gas is provided in an individual battery, but it is preferable to cut off a current in the battery when an abnormality occurs. Therefore, it has been proposed to provide a mechanism for cutting off a current when an abnormality occurs in a battery (hereinafter, a current interruption device (CID)).

For example, in Patent Literature 1, a pair of holding plates that adhere to each other is provided on an exterior component of a battery, and a fragile element forming a conductive path is connected between the two holding plates. Then, the element is broken when the exterior component expands, thereby cutting off a current.

### CITATION LIST

### PATENT LITERATURE

Patent Literature 1: JP 2001-196049 A

In Patent Literature 1, the holding plates and the element are specially provided on the exterior component of the battery. Therefore, there is a problem that the number of components increases, which increases the cost, and when batteries are stacked, the external sizes of the batteries increases.

Note that, instead of the CID, an electric circuit interruption mechanism that monitors a battery voltage and interrupts a current when an abnormality is detected from the detected value of the battery voltage may be provided, but there are many cases where a current cannot be sufficiently interrupted in response to an abnormality of an individual battery.

### SUMMARY

A power storage device according to the present disclosure includes: an electrode assembly including a first electrode and a second electrode; an outer can including a cylindrical portion, a bottom portion provided at one end of the cylindrical portion in an axial direction, and an opening formed at the other end of the cylindrical portion in the axial direction, the outer can accommodating the electrode assembly; a sealing assembly closing the opening; and an electrode terminal electrically connected to the outer can, in which an annular groove positioned between the electrode assembly and the sealing assembly is formed on an outer circumferential surface of the cylindrical portion, the electrode terminal includes, an outer surface of the outer can, a first connection portion joined to a side closer to the bottom portion than the groove, a second connection portion positioned on a side closer to the opening than the groove, and a bridge portion connecting the first connection portion and the second connection portion to each other, and the groove expands in the axial direction due to expansion of the outer can, so that the bridge portion is broken to cut off a current between the first connection portion and the second connection portion.

The second connection portion may include a side wall connected to the bridge portion at one end thereof and extending in the axial direction, and an end wall connected to the other end of the side wall and extending in a diameter direction inward of the sealing assembly, and the end wall may cover an end surface of the power storage device in the axial direction.

The side wall may have a cylindrical shape, and the end wall may be an annular disk.

An insulating member may be interposed between the second connection portion and the outer can, and the second connection portion may be fixed to a side closer to the opening than the groove of the cylindrical portion via the insulating member.

The bridge portion may have a smaller area of a cross section perpendicular to the axial direction than the first connection portion and the second connection portion.

The bridge portion may be thinner than the first connection portion and the second connection portion.

The bridge portion may have a dimension in a width direction that decreases from the second connection portion toward the first connection portion in the axial direction.

The bridge portion may be fused in a case where a large current flows.

One of the first connection portion and the second connection portion may have a protrusion extending toward the other connection portion with a tip thereof being separated from the other connection portion in the axial direction, and the protrusion may overlap the bridge portion in a circumferential direction of the outer can.

According to the present disclosure, a CID can be provided in each individual cylindrical battery with a relatively simple configuration, and a current can be reliably cut off when an abnormality occurs.

### BRIEF DESCRIPTION OF DRAWINGS

FIG. 1 is a cross-sectional view of a cylindrical battery as an example of an embodiment.
FIG. 2 is a perspective view illustrating a configuration of an electrode terminal.
FIG. 3A is a perspective view of a cylindrical battery in a normal state.
FIG. 3B is a perspective view of a cylindrical battery, when an internal pressure increases (in an abnormal state).
FIG. 4A is a view illustrating an example of a configuration of a bridge portion when four bridge portions are provided.
FIG. 4B is a view illustrating an example of a configuration of a bridge portion a state in which the bridge portion is cut.
FIG. 5 is a view illustrating a bridge portion in another example.
FIG. 6A is a view illustrating a bridge portion in another example.
FIG. 6B is a view illustrating a bridge portion in another example.
FIG. 6C is a view illustrating a bridge portion in another example.
FIG. 6D is a view illustrating a bridge portion in another example.
FIG. 7A is a view illustrating a shape of a bridge portion in another example (an example in which a thin wall is used).
FIG. 7B is a view illustrating a cross section of a bridge portion in another example (an example in which a thin wall is used).
FIG. 8A is a view illustrating a bridge portion in another example (an example suitable for fusing resulting from a large current).
FIG. 8B is a view illustrating a bridge portion in another example (an example suitable for fusing resulting from a large current).
FIG. 9A is a view illustrating a shape of a bridge portion in another example (an example in which the bridge portion is concave in a diameter direction).
FIG. 9B is a view illustrating a cross section of a bridge portion in another example (an example in which the bridge portion is concave in a diameter direction).

### DESCRIPTION OF EMBODIMENTS

Hereinafter, an example of an embodiment of a cylindrical battery will be described in detail as an example of a power storage device according to the present disclosure with reference to the drawings. Note that the present disclosure includes a configuration obtained by selectively combining a plurality of embodiments and modifications to be described below. The power storage device according to the present disclosure is not limited to the cylindrical battery, and may be another electrochemical element such as a capacitor using a cylindrical outer can electrically connected to an electrode assembly.

### "Overall Configuration"

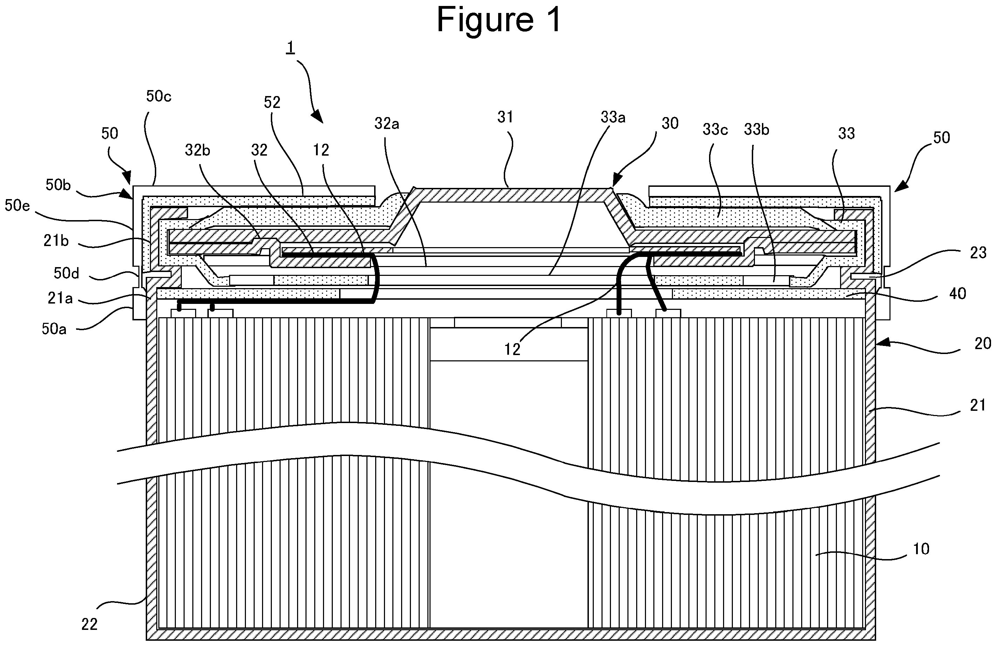

FIG. 1 is a cross-sectional view of a battery 1 which is an example of a power storage device according to an embodiment. The battery 1 includes an electrode assembly 10, an outer can 20 that has a cylindrical portion, a bottom portion at one end of the cylindrical portion in an axial direction, and an opening at the other end of the cylindrical portion to accommodate the electrode assembly 10, and a sealing assembly 30 that closes the opening of the outer can 20. An electrolytic solution is accommodated in the outer can 20 together with the electrode assembly 10. The electrolytic solution may be an aqueous electrolytic solution, but a non-aqueous electrolytic solution is used in the present embodiment. The outer can 20 has an annular groove 23 formed in the cylindrical portion 21, and the sealing assembly 30 is supported by the groove 23 to close the opening of the outer can 20. Hereinafter, for convenience of description, a side of the battery 1 where the sealing assembly 30 is located will be referred to as an upper side, and a side of the battery 1 where the bottom portion 22 of the outer can 20 will be referred to as a lower side.

The battery 1 further includes an electrode lead extending from an upper end of the electrode assembly 10 in the axial direction and directly connecting a first electrode constituting the electrode assembly 10 and a current collecting plate 32 of the sealing assembly 30, and an upper insulating plate 40 disposed between the electrode assembly 10 and the sealing assembly 30. The electrode assembly 10 is a winding-type electrode assembly in which a first electrode and a second electrode are wound with a separator interposed therebetween. In the present embodiment, the first electrode is a positive electrode, the second electrode is a negative electrode, and the electrode lead is a positive electrode lead 12.

The positive electrode lead 12 electrically connects the positive electrode and the sealing assembly 30 to each other, and the negative electrode lead electrically connects the negative electrode and the outer can 20 to each other. Therefore, the sealing assembly 30 functions as a positive electrode external terminal, and the outer can 20 functions as a negative electrode terminal. The upper insulating plate 40 prevents the positive electrode and the positive electrode lead 12 from coming into contact with the outer can 20, and also prevents the positive electrode lead 12 from coming into contact with the negative electrode of the electrode assembly 10. The positive electrode and the negative electrode may be formed to have exposed portions, which are partial portions of cores of electrode plates exposed from composite layers protruding in the axial direction may be formed, and these exposed portions may be joined to the current collecting plate (not illustrated) by welding, and electrically connected to the sealing assembly 30 and the outer can 20 via the current collecting plate.

The positive electrode, the negative electrode, and the separator of the electrode assembly 10 are all band-like long members, and are spirally wound so as to be alternately stacked in a diameter direction of the electrode assembly 10. The composite layer of the negative electrode may be formed to have a size slightly larger than that of the composite layer of the positive electrode in order to prevent precipitation of lithium. That is, the composite layer of the negative electrode may be formed to be longer than the composite layer of the positive electrode in the longitudinal direction and the width direction (short-length direction). The separator is formed to have a size slightly larger than that of at least the positive electrode, and for example, two separators are disposed so as to sandwich the positive electrode therebetween.

The positive electrode includes a positive electrode core and a positive composite layer formed on at least one surface of the positive electrode core. As the positive electrode core, a foil of a metal, e.g., aluminum or an aluminum alloy, which is stable in a potential range of the positive electrode, a film in which the metal is disposed on a surface layer thereof, or the like can be used. The positive composite layer includes, for example, a positive electrode active material, a conductive agent such as acetylene black, and a binder such as polyvinylidene fluoride, and is preferably formed on both surfaces of the positive electrode core. As the positive electrode active material, for example, a lithium-transition metal composite oxide is used. The positive electrode lead 12 is connected to the positive electrode, but is preferably directly joined to the positive electrode core by welding or the like.

The negative electrode includes a negative electrode core and a negative composite layer formed on at least one surface of the negative electrode core. As the negative electrode core, for example, a foil of a metal, e.g., copper or a copper alloy, which is stable in a potential range of the negative electrode, a film in which the metal is disposed on a surface layer thereof, or the like can be used. The negative composite layer includes, for example, a negative electrode active material and a binder such as styrene-butadiene rubber (SBR), and is preferably formed on both surfaces of the negative electrode core. As the negative electrode active material, for example, graphite, a silicon-containing compound, or the like is used. The negative electrode lead is preferably directly joined to the negative electrode core by welding or the like. It is also possible to electrically connect the negative electrode core and the outer can 20, not through the negative electrode lead.

The non-aqueous electrolyte accommodated in the outer can 20 includes a non-aqueous solvent and an electrolyte salt dissolved in the non-aqueous solvent. As the non-aqueous solvent, for example, esters, ethers, nitriles, amides, and mixed solvents of two or more thereof are used. The non-aqueous solvent may contain a halogen-substituted product in which at least some of hydrogen in any of the solvents described above is substituted with a halogen atom such as fluorine. Examples of the non-aqueous solvent include ethylene carbonate (EC), ethyl methyl carbonate (EMC), dimethyl carbonate (DMC), and mixed solvents thereof. As the electrolyte salt, for example, a lithium salt such as LiPF₆ is used. The non-aqueous electrolyte may be a gel electrolyte, a solid electrolyte, or the like rather than the electrolytic solution.

The outer can 20 is a bottomed cylindrical metal container having an opening at one end (upper end) in the axial direction, and has a cylindrical portion 21 formed in a cylindrical shape and a bottom portion 22 having a circular shape in a bottom view. The outer can 20 is generally made of a metal containing iron as a main component, but may be made of a metal containing aluminum or the like as a main component in a case where the positive electrode is connected thereto. The outer can 20 has a groove 23 formed along a circumferential direction of the cylindrical portion 21. The groove 23 is formed at a position away from an opening edge (an upper end of the outer can 20) by a predetermined length near the opening of outer can 20. The predetermined length is, for example, a length corresponding to greater than or equal to 1% and less than or equal to 20% of the axial length of the outer can 20.

In the battery 1 according to the present embodiment, an exhaust valve mechanism that operates when an abnormality occurs in the battery 1 is provided on the bottom portion 22 of the outer can 20. On the other hand, the sealing assembly 30 is not provided with an exhaust valve mechanism. For example, a thin wall is formed as the bottom portion 22. When an abnormality occurs in the battery 1 and the internal pressure increases, the thin wall is preferentially broken. A gas discharge port may be formed in the bottom portion 22. In the power storage device according to the present disclosure, the sealing assembly 30 may be provided with a pressure-sensitive current interrupting mechanism separately from the exhaust valve mechanism, a temperature-sensitive current interrupting device, and an electrode terminal 50.

The groove 23 is a partial portion of the cylindrical portion 21 protruding inward of the outer can 20, and is formed by, for example, spinning the cylindrical portion 21 from the outside. At the position where the groove 23 is formed, the outer can 20 is reduced in diameter, and a thin linear groove is formed on the outer circumferential surface of the cylindrical portion 21. It is preferable that the groove 23 has a substantially U-shaped cross section and is formed in an annular shape over the entire circumferential length of the cylindrical portion 21. The groove 23 is preferably formed by processing the cylindrical portion 21 after the electrode assembly 10 is accommodated in the outer can 20.

An inner diameter of the outer can 20 at the position where the groove 23 is formed is, for example, greater than or equal to 80% and less than or equal to 99% of the maximum inner diameter of the outer can 20. An example of a length of the groove 23 along a diameter direction of the outer can 20 is greater than or equal to 0.5 mm and less than or equal to 2.0 mm. Since the diameter of the electrode assembly 10 is substantially equal to the maximum inner diameter of the outer can 20, the electrode assembly 10 and the groove 23 overlap with each other when viewed in the vertical direction (axial direction) of the battery 1. In the present embodiment, lower ends of a plurality of positive electrode leads 12 are connected to the positive electrode core at a plurality of places, and upper ends of the positive electrode leads 12 are electrically connected to a cap 31 via the current collecting plate 32. Note that the number of positive electrode leads 12 may be one or more.

In the outer can 20, an outer dimension of a portion closer to the opening than a portion accommodating the electrode assembly 10 in the axial direction may be smaller than an outer dimension of the portion accommodating the electrode assembly 10. With this configuration, as an outer shape of the outer can 20, the portion closer to the opening of the outer can 20 is recessed from the other portion of the outer can 20. By accommodating the electrode terminal 50 in this recess, it is possible to suppress protrusion of the electrode terminal 50 from the outer can 20 in the diameter direction and to suppress an increase in size of the battery 1 in the diameter direction.

The sealing assembly 30 includes a cap 31, a current collecting plate 32, and a gasket 33, and is formed in a disk shape as a whole. The sealing assembly 30 is disposed on the groove 23 of the outer can 20, and is fixed to the upper end of the outer can 20. An upper end of the opening of the outer can 20 is bent inward in the diameter direction and caulked to the sealing assembly 30. In other words, the sealing assembly 30 is fixed to the upper end of the outer can 20 by the groove 23 and the caulking portion of the outer can 20 to close the opening of the outer can 20. The caulking portion is formed in an annular shape along the circumferential direction of the outer can 20, and sandwiches the sealing assembly 30 in the axial direction together with the groove 23.

The cap 31 is a disk-shaped metal member, and is exposed to the outside of the outer can 20 and forms a top surface of the battery 1. The cap 31 has a shape (raised portion) in which a central portion in the diameter direction protrudes outward of the battery 1. A wiring member is connected to the cap 31 when the battery 1 is modularized to form an assembled battery. For this reason, the cap 31 functions as an external terminal of the battery 1, and is also called an external terminal or a top cover. In the battery 1 according to the present embodiment, the positive electrode lead 12 is connected to the current collecting plate 32, and the cap 31 functions as a positive electrode external terminal.

The current collecting plate 32 is a metal member having substantially the same diameter as the cap 31, and is disposed closer to the electrode assembly 10 than the cap 31. The current collecting plate 32 has an opening 32a at a central portion thereof in the diameter direction, and is formed in an annular shape. The cap 31 and the current collecting plate 32 are welded to each other, and the current collecting plate 32 is welded, for example, at a position closer to an outer circumferential edge than the center in the diameter direction of the cap 31. The current collecting plate 32 has a projection 32b to be described later, and the projection 32b is a portion welded to the cap 31. Since the positive electrode lead 12 connected to the positive electrode of the electrode assembly 10 is connected to the current collecting plate 32 as described above, the current collecting plate 32 functions as a positive electrode current collecting plate.

The gasket 33 is provided between an outer circumferential portion of a laminate in which the cap 31 and the current collecting plate 32 are formed and the outer can 20. The gasket 33 is a rubber member or a resin member for preventing the cap 31 and the current collecting plate 32 from coming into contact with the outer can 20 to ensure electrical insulation between the outer can 20 and the sealing assembly 30. The gasket 33 covers an upper surface of the cap 31, side surfaces of the cap 31 and the current collecting plate 32, and a lower surface of the current collecting plate 32 on the outer circumferential portion of the laminate. The gasket 33 seals the inside of the battery 1 by closing a gap between the outer can 20 and the sealing assembly 30.

The gasket 33 is an annular resin member, is formed to cover most of the lower surface of the current collecting plate 32, and is interposed between the current collecting plate 32 and the upper insulating plate 40. The gasket 33 has an opening 33a formed in a central portion thereof in the diameter direction so as to overlap with the opening 32a of the current collecting plate 32 in the vertical direction. The gasket 33 may have a through hole 33b formed in a portion located below the current collecting plate 32. Although it is assumed that an electrolytic solution is accumulated on the upper surface of the gasket 33, the electrolytic solution can be efficiently returned toward the electrode assembly 10 by providing the through hole 33b. For example, a plurality of through holes 33b are formed along the circumferential direction of the gasket 33. Further, the gasket 33 has an annular portion 33c to cover from an outer circumferential portion to a skirt portion of the raised portion of the cap 31.

### "CID"

The battery 1 has a current interruption device (CID) at the negative electrode terminal. That is, the cap-shaped electrode terminal 50 functions as a CID.

Here, the outer can 20 has an annular groove 23 in the cylindrical portion 21 as described above. A portion of the cylindrical portion 21 lower than the groove 23 will be referred to as a lower portion 21a of the cylindrical portion 21, and a portion of the cylindrical portion 21 higher than the groove 23 will be referred to as an upper portion 21b of the cylindrical portion 21.

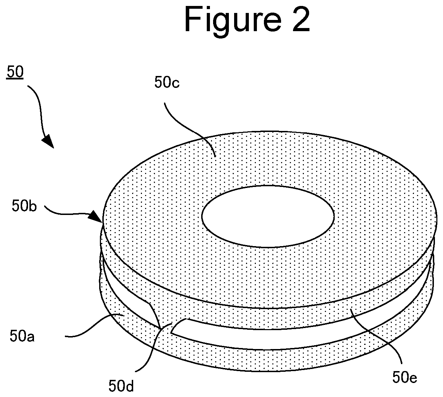

FIG. 2 is a perspective view illustrating the electrode terminal 50. As illustrated in FIG. 2, the electrode terminal 50 includes a first connection portion 50a surrounding the lower portion 21a from the groove 23 on a side close to the bottom portion, a second connection portion 50b surrounding the upper portion 21b, which is a portion toward the opening from the groove 23, and a bridge portion 50d which is a thin passage connecting the first connection portion 50a and the second connection portion 50b to each other.

The first connection portion 50a is joined to the lower portion 21a of the outer can 20 to be electrically connected to the outer can 20.

The second connection portion 50b is disposed on the upper portion 21b of the outer can 20. The second connection portion 50b is disposed on the upper portion 21b with an insulating material 52 interposed therebetween. The second connection portion 50b includes a cylindrical side wall 50e extending in the axial direction and an annular end wall 50c extending inward in the diameter direction of the side wall 50e.

The bridge portion 50d has a trapezoidal shape (a shape close to a triangle) in which a portion connected to the second connection portion 50b is long and a portion connected to the first connection portion 50a is short, and the portion connected to the first connection portion 50a is easily broken. The first connection portion 50a and the second connection portion 50b do not need to be annular. The bridge portion 50d may extend so as to cover an area equal to or less than half the circumferences of the outer can 20 and the sealing assembly 30 in the circumferential direction. The surfaces of the first connection portion 50a and the second connection portion 50b facing the outer can 20 may not be curved surfaces along the side surface of the outer can 20. For example, the surfaces of the first connection portion 50a and the second connection portion 50b may be flat surfaces. One end of the first connection portion 50a may be joined to the bottom portion 22. The first connection portion 50a joined to the bottom portion 22 may have a bending point in the middle in the long-length direction, one end side from the bending point may face the bottom portion 22, and the other end side from the bending point may face the outer circumferential surface of the cylindrical portion 21.

When the second connection portion 50b is disposed only at the upper portion 21b in the axial direction, a partial portion of the first connection portion 50a and the bridge portion 50d may extend to the upper portion 21b. Also, when the first connection portion 50a is disposed only at the lower portion 21a, a partial portion of the second connection portion 50b and the bridge portion 50d may extend to the lower portion 21a.

When the side wall 50e is fixed to the upper portion of the outer can 20 via the insulating member, the second connection portion 50b may have only the side wall 50e without the end wall 50c. At least one of the first connection portion 50a, the second connection portion 50b, and the bridge portion 50d may be formed of two pieces.

In this example, two bridge portions 50d are provided at positions different by 180 degrees from each other. The number of bridge portions 50d is not limited. There may be only one bridge portion 50d as long as the bridge portion 50d functions as a CID or a current collecting path in a normal state.

The insulating material 52 is disposed between the second connection portion 50b, the end wall 50c, and the outer can 20. Accordingly, only the first connection portion 50a is electrically connected to the cylindrical portion 21 of the outer can 20 in a direct manner. Therefore, in a case where the end wall 50c or the second connection portion 50b is used as an external terminal, a current path between the negative electrode of the electrode assembly 10 and the external terminal passes through the bridge portion 50d.

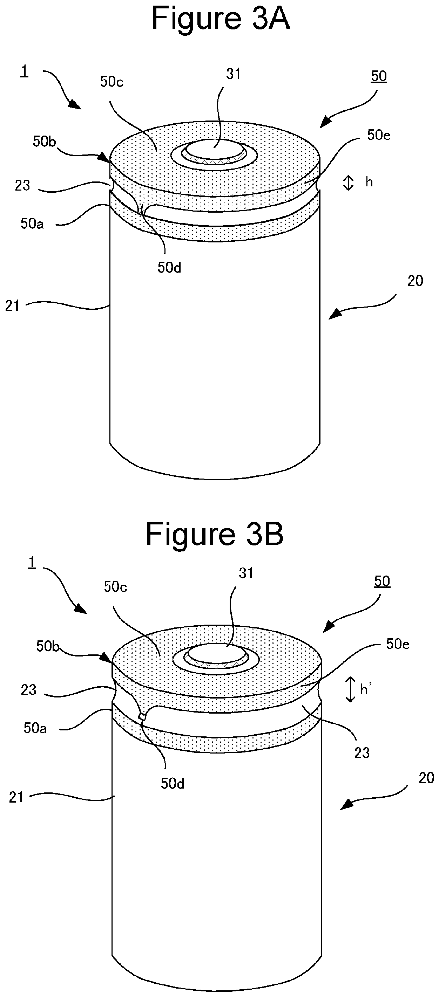

FIG. 3A is a perspective view of battery 1 in a normal state, and FIG. 3B is a perspective view of battery 1 when an internal pressure rises (in an abnormal state). In this manner, the groove 23 having a width h in the normal state widens to have a width h' in the abnormal state. As a result, the upper portion 21b pushes up the end wall 50c via the insulating material 52. As the end wall 50c is pushed, the portion of the bridge portion 50d connected to the first connection portion 50a is broken, and the negative electrode of the electrode assembly 10 is disconnected from the second connection portion 50b, which is an external negative electrode terminal, and the end wall 50c. That is, the current from the battery 1 is cut off.

The electrode terminal 50 is made of a conductive material such as a nickel-plated steel plate, an aluminum hot-dip plated steel plate, aluminum, or an aluminum alloy to function as an external terminal (a negative electrode external terminal in this case). In addition, the insulating material 52 can be formed of a resin material such as an epoxy resin to function as an adhesive. The electrode terminal 50 may be formed by joining two of the first connection portion 50a, the second connection portion 50b, and the bridge portion 50d by welding or the like.

In addition, the first connection portion 50a and the cylindrical portion 21 of the outer can 20 can be connected to each other by laser welding or the like, and various means such as electron beam welding, brazing, resistance welding, friction stir welding, and ultrasonic welding can be adopted.

The first connection portion 50a may be connected to the cylindrical portion 21 of the outer can 20 over the entire circumference or in discrete areas by spot welding or the like.

In the battery 1, the cross section perpendicular to the axial direction of the bridge portion 50d has an area smaller than those of the first connection portion 50a and the second connection portion 50b. For example, the bridge portion 50d is thinner than the first connection portion 50a and the second connection portion 50b. This is to adjust a place where mechanical strength and stress are concentrated within a range in which the bridge portion 50d has no problem as a current path in a normal state. At the time when the groove 23 widens in an abnormal state, the size and shape of the bridge portion 50d may be adjusted so that the bridge portion 50d is broken at an appropriate timing. As well as forming the bridge portion 50d thin, the dimension in the direction (width direction) perpendicular to the extending direction of the bridge portion 50d may be smaller than the dimensions in the direction perpendicular to the axial direction of the first connection portion 50a and the second connection portion 50b.

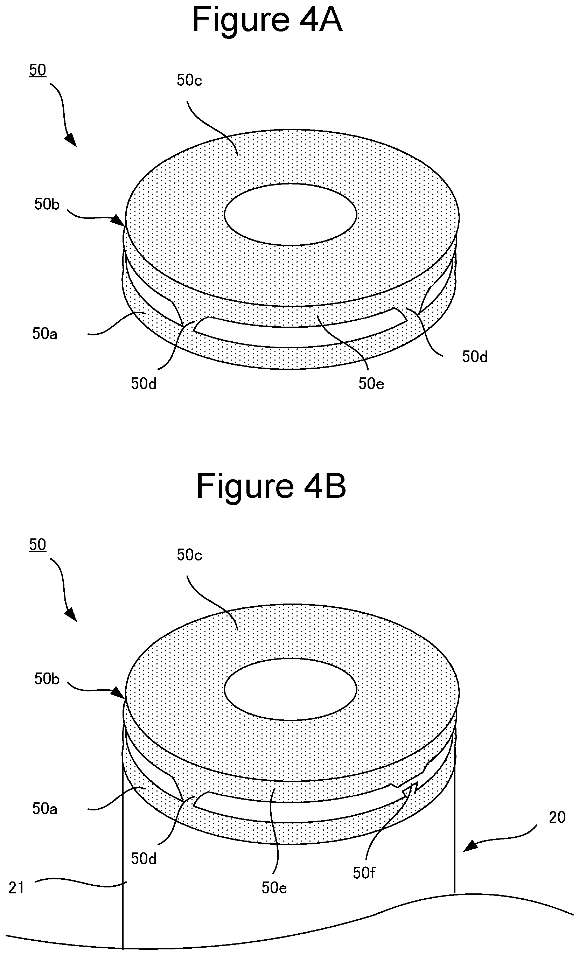

FIG. 4A illustrates an example in which four bridge portions 50d are provided. By increasing the number of bridge portions 50d in this manner, the strength of the electrode terminal 50 increases. Therefore, a large number of bridge portions 50d can be used at the time of attaching the electrode terminal 50 to the outer can 20, and some of the bridge portions 50d can be cut after the attachment is completed to make the number of bridge portions 50d appropriate. The bridge portion 50d can be cut by laser processing or mechanical processing using a cutting tool or the like. By performing such processing, a protrusion can be formed on at least one of the first connection portion 50a and the second connection portion 50b in such a manner as to protrude toward the other connection portion in the axial direction. In addition, the tip of the protrusion is separated from the other connection portion. In addition, the protrusion overlaps the bridge portion 50d in the circumferential direction of the outer can 20. In the power storage device according to the present disclosure, the above-described processing is not essential.

FIG. 4B illustrates one bridge portion 50d in a cut state after being attached to the outer can 20. When the bridge portion 50d is cut in this manner, a trace (cutting mark) 50f usually remains.

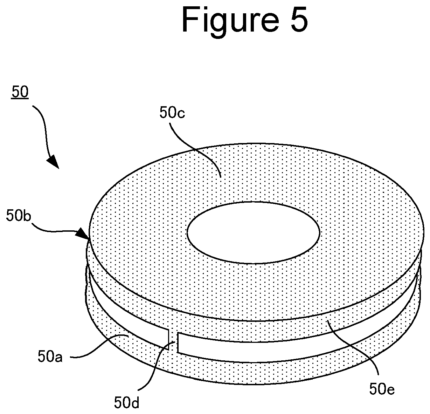

FIG. 5 is a view illustrating another example of the bridge portion 50d. In this example, the bridge portion 50d has a thin plate shape with a constant width, and the portion connected to the second connection portion 50b and the portion connected to the first connection portion 50a have the same length.

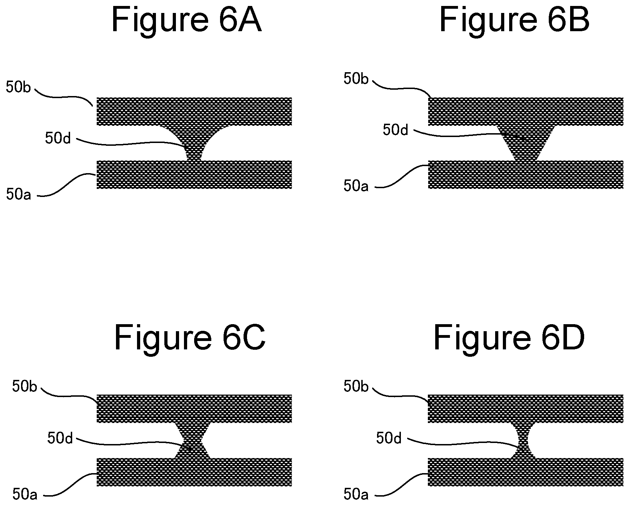

FIG. 6 is a view illustrating the bridge portion 50d in other examples. In FIG. 6A, the bridge portion 50d, which is similar to that described with reference to FIG. 2, expands upward with both sides being curved to be concave inward, and is smoothly connected to the second connection portion 50b. In FIG. 6B, the bridge portion 50d has a trapezoidal shape with both sides being straight. In FIG. 6C, the bridge portion 50d has a shape in which a width of a central portion thereof in the vertical direction is narrowest as if two trapezoids are connected. In FIG. 6D, the bridge portion 50d has a width that is narrowest at a central portion thereof similarly to that in FIG. 6C, but both sides of the bridge portion 50d are curved with central portions thereof being concave.

Such a bridge portion 50d can also be broken when the outer can 20 is expanded, thereby cutting off current.

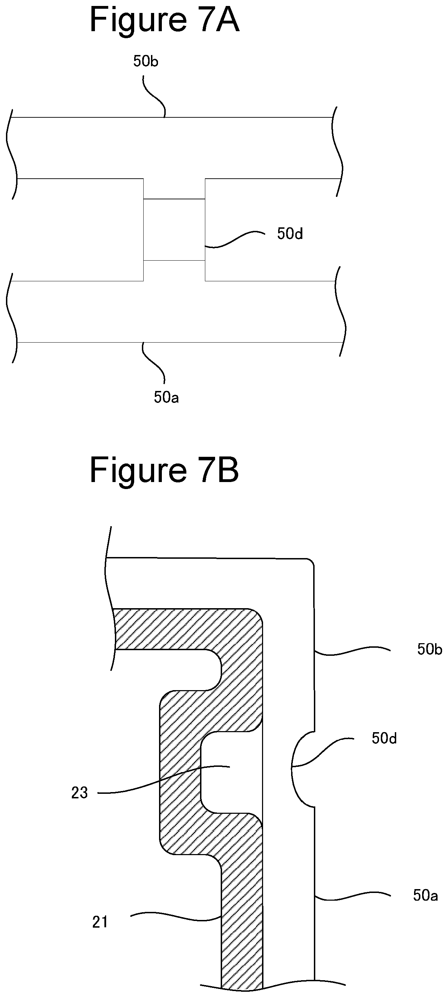

FIGS. 7A and 7B are views illustrating the bridge portion 50d in another example. FIG. 7A is a schematic view illustrating a shape of the bridge portion 50d, and FIG. 7B is a cross-sectional view illustrating the battery 1 including the bridge portion 50d.

In this example, a partial portion (a central portion in the vertical direction) of the bridge portion 50d is thinner than the other portions (portions close to upper and lower ends) of the bridge portion 50d. The thinner portion can be formed by, for example, pressing. Alternatively, the thinner portion may be formed by irradiating a region to be thinner with a laser, and shaving (trimming) a partial portion of the region. When the bridge portion 50d is made of aluminum, the bridge portion 50d can be easily trimmed with a laser.

In this example, the insulating material 52 is omitted. Therefore, the second connection portion 50b is also in contact with the outer can 20. In a case where the bridge portion 50d has a function of fusing resulting from an overcurrent, the insulating material 52 that insulates the outer can 20 and the second connection portion 50b from each other may be provided as in the example of FIG. 1.

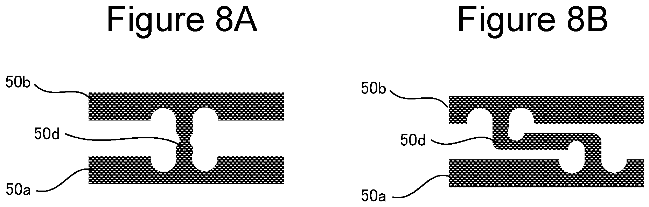

FIGS. 8A and 8B illustrate the bridge portion 50d in other examples. In FIG. 8A, the bridge portion 50d has a shape in which a central portion thereof in the vertical direction is concave from both sides, and both sides of the connection portion between the bridge portion 50d and the second connection portion 50b and both sides of the connection portion between the bridge portion 50d and the first connection portion 50a are concave in a semicircular shape. In FIG. 8B, similarly to FIG. 8A, both sides of the connection portion between the bridge portion 50d and the second connection portion 50b and both sides of the connection portion between the bridge portion 50d and the first connection portion 50a are concave in a semicircular shape, but the position of the portion of the bridge portion 50d connected to the second connection portion 50b and the position of the portion of the bridge portion 50d connected to the first connection portion 50a are different in the circumferential direction of the outer can 20. Therefore, an intermediate portion extending in the circumferential direction is formed at the central portion of the bridge portion 50d in the vertical direction. In addition, semicircular depressions are formed in base portions (bent portions) of the intermediate portion extending in the circumferential direction. By elongating the bridge portion 50d in this manner, it is possible to form a bridge portion that can be fused without significantly increasing the dimension of the bridge portion 50d in the axial direction.

The examples of FIGS. 8A and 8B are particularly suitable for fusing resulting from an overcurrent (large current). That is, when the battery current becomes excessive, the current flowing through the bridge portion 50d becomes excessive, and accordingly, the bridge portion 50d is heated to a high temperature and fused. In this case, the electrode terminal 50 may be made of aluminum or an aluminum alloy. By covering the bridge portion 50d with a resin such as a polyimide film, the heat dissipation property may be reduced at a portion to be fused to adjust the fusing characteristics.

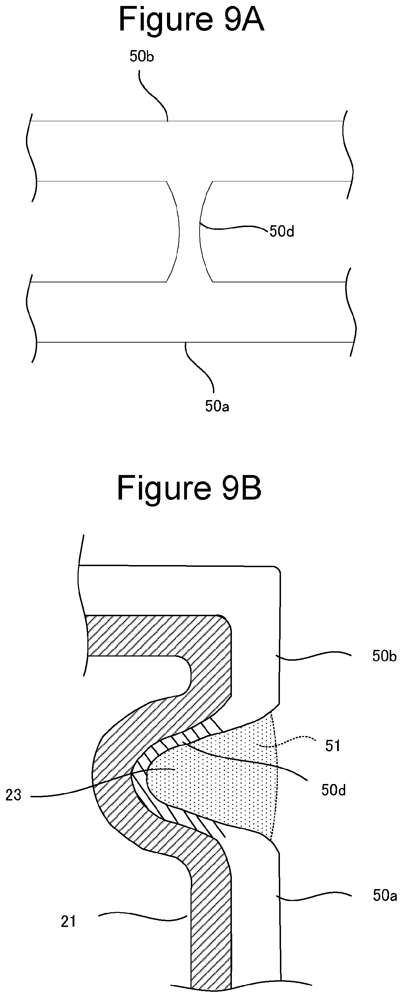

FIGS. 9A and 9B are views illustrating the bridge portion 50d in another example. FIG. 9A is a schematic view illustrating a shape of the bridge portion 50d, and FIG. 9B is a cross-sectional view illustrating the battery 1 including the bridge portion 50d. In this example, the bridge portion 50d extends in the diameter direction (the thickness direction of the bridge portion) as well as the circumferential direction and the axial direction of the battery 1. With this configuration, even if the space in the circumferential direction or the axial direction is limited, the distance (length) of the bridge portion 50d can be stably secured.

In this example, the bridge portion 50d extends in the diameter direction along the surface of the groove 23 so as to be accommodated in the depression of the groove 23 of the outer can 20.

In addition, the surface of the bridge portion 50d extending in the diameter direction may be covered with, for example, a potting material such as a resin. In the illustrated example, in a case where the bridge portion 50d is at the position of the groove 23, the groove 23 is filled with a potting material.

In a case where the electrode terminal is made of a corrosion-prone material such as aluminum, which is easily corroded by chloride ions, the potting material can suppress corrosion of the bridge portion 50d. By suppressing corrosion, it is possible to suppress current interruption at the bridge portion 50d at an earlier timing.

The bridge portion 50d covered with the potting material does not need to be positioned to face the groove 23.

In this example as well, the insulating material 52 that insulates the outer can 20 and the second connection portion 50b from each other may be provided.

In an electric vehicle or the like, it is necessary to mount a large-capacity battery, and batteries that make up one unit are also becoming larger. When such a large battery is packaged, it is often more efficient to pull out cables from one end of the package. Therefore, the present embodiment adopts a configuration in which current is collected from both the positive electrode terminal and the negative electrode terminal of the battery are collected at one end. In this example, the aforementioned structure is adopted for the electrode terminal 50 on the negative electrode side. However, the polarity of the battery can be reversed, and the bridge portion 50d can be provided in the electrode terminal 50 on the positive electrode side.

### REFERENCE SIGNS LIST

- 1: Battery (power storage device)
- 10: Electrode assembly
- 12: Positive electrode lead
- 20: Outer can
- 21: Cylindrical portion
- 21a: Lower portion
- 21b: Upper portion
- 22: Bottom portion
- 23: Groove
- 30: Sealing assembly
- 31: Cap
- 32: Current collecting plate
- 32a: Opening
- 32b: Projection
- 33: Gasket
- 33a: Opening
- 33b: Through hole
- 33c: Doughnut-shaped portion
- 40: Upper insulating plate
- 50: Electrode terminal
- 50a: First connection portion
- 50b: Second connection portion
- 50c: End wall
- 50e: Side wall
- 50d: Bridge portion
- 52: Insulating material

## Claims

1. A power storage device (1) comprising:
an electrode assembly (10) including a first electrode and a second electrode;
an outer can (20) including a cylindrical portion (21), a bottom portion (22) provided at one end of the cylindrical portion (21) in an axial direction, and an opening formed at the other end of the cylindrical portion (21) in the axial direction, the outer can (20) accommodating the electrode assembly (10);
a sealing assembly (30) closing the opening; and
an electrode terminal (50) electrically connected to the outer can (20), wherein
an annular groove (23) positioned between the electrode assembly (10) and the sealing assembly (30) is formed on an outer circumferential surface of the cylindrical portion (21),
**characterized in that**
the electrode terminal (50) includes, an outer surface of the outer can (20), a first connection portion (50a) joined to a side closer to the bottom portion (22) than the groove (23), a second connection portion (50b) positioned on a side closer to the opening than the groove (23), and a bridge portion (50c) connecting the first connection portion (50a) and the second connection portion (50b) to each other, and
the groove (23) is configured to expand in the axial direction due to expansion of the outer can (20), so that the bridge portion (50c) is broken to cut off a current between the first connection portion (50a) and the second connection portion (50b).

2. The power storage device (1) according to claim 1, wherein
the second connection portion (50b) includes a side wall (50e) connected to the bridge portion (50c) at one end thereof and extending in the axial direction, and an end wall (50c) connected to the other end of the side wall (50e) and extending in a diameter direction inward of the sealing assembly (30), and
the end wall (50c) covers an end surface of the power storage device (1) in the axial direction.

3. The power storage device (1) according to claim 2, wherein
the side wall (50e) has a cylindrical shape, and
the end wall (50c) is an annular disk.

4. The power storage device (1) according to claim 1, wherein
an insulating member (52) is interposed between the second connection portion (50b) and the outer can (20), and
the second connection portion (50b) is fixed to a side closer to the opening than the groove (23) of the cylindrical portion (21) via the insulating member (52).

5. The power storage device (1) according to any one of claims 1 to 4, wherein
the bridge portion (50c) has a smaller area of a cross section perpendicular to the axial direction than the first connection portion (50a) and the second connection portion (50b).

6. The power storage device (1) according to claim 5, wherein
the bridge portion (50c) is thinner than the first connection portion (50a) and the second connection portion (50b).

7. The power storage device (1) according to claim 5, wherein
the bridge portion (50c) has a dimension in a width direction that decreases from the second connection portion (50b) toward the first connection portion (50a) in the axial direction.

8. The power storage device (1) according to any one of claims 1 to 7, wherein
the bridge portion (50c) is fused in a case where a large current flows.

9. The power storage device (1) according to any one of claims 1 to 7, wherein
one of the first connection portion (50a) and the second connection portion (50b) has a protrusion extending toward the other connection portion with a tip thereof being separated from the other connection portion in the axial direction, and
the protrusion overlaps the bridge portion (50c) in a circumferential direction of the outer can (20).

10. The power storage device (1) according to claim 9, wherein
the bridge portion (50c) is fused in a case where a large current flows.

## Patentansprüche

1. Energiespeichervorrichtung (1) mit:
einer Elektrodenanordnung (10) mit einer ersten Elektrode und einer zweiten Elektrode,
einem äußeren Becher (20) mit einem zylindrischen Abschnitt (21), einem Bodenabschnitt (22), der an einem Ende des zylindrischen Abschnitts (21) in einer axialen Richtung gebildet ist, und einer Öffnung, die an dem anderen Ende des zylindrischen Abschnitts (21) in der axialen Richtung gebildet ist, wobei der äußere Becher (20) die Elektrodenanordnung (10) aufnimmt,
einer Versiegelungsanordnung (30), die die Öffnung verschließt, und
einem Elektrodenanschluss (50), der elektrisch mit dem äußeren Becher (20) verbunden ist, wobei
eine ringförmige Nut (23), die zwischen der Elektrodenanordnung (10) und der Versiegelungsanordnung (30) angeordnet ist, auf einer äußeren Umfangsfläche des zylindrischen Abschnitts (21) gebildet ist,
**gekennzeichnet dadurch, dass**
der Elektrodenanschluss (50) auf einer äußeren Oberfläche des äußeren Bechers (20) einen ersten Verbindungsabschnitt (50a), der mit einer Seite näher zu dem Bodenabschnitt (22) als die Nut (23) verbunden ist, einen zweiten Verbindungsabschnitt (50b), der an einer Seite näher an der Öffnung als die Nut (23) angeordnet ist, und einen Brückenabschnitt (50c) aufweist, der den ersten Verbindungsabschnitt (50a) und den zweiten Verbindungsabschnitt (50b) miteinander verbindet, und
die Nut (23) ausgestaltet ist, sich infolge einer Ausdehnung des äußeren Bechers (20) in der axialen Richtung auszudehnen, so dass der Brückenabschnitt (50c) gebrochen wird, um einen Strom zwischen dem ersten Verbindungsabschnitt (50a) und dem zweiten Verbindungsabschnitt (50b) zu unterbrechen.

2. Energiespeichervorrichtung (1) nach Anspruch 1, wobei
der zweite Verbindungsabschnitt (50b) eine Seitenwandung (50e), die mit dem Brückenabschnitt (50c) an einem Ende davon verbunden ist und sich in der axialen Richtung erstreckt, und eine Endwandung (50c) aufweist, die mit dem anderen Ende der Seitenwandung (50e) verbunden ist und sich in einer Durchmesserrichtung einwärts der Versiegelungsanordnung (30) erstreckt, und
die Endwandung (50c) eine Endoberfläche der Energiespeichervorrichtung (1) in der axialen Richtung bedeckt.

3. Energiespeichervorrichtung (1) nach Anspruch 2, wobei
die Seitenwandung (50e) eine zylindrische Form aufweist und
die Endwandung (50c) eine ringförmige Scheibe ist.

4. Energiespeichervorrichtung (1) nach Anspruch 1, wobei
ein Isolierelement (52) zwischen dem zweiten Verbindungsabschnitt (50b) und dem äußeren Becher (20) eingeschlossen ist, und
der zweite Verbindungsabschnitt (50b) über das Isolierelement (52) an einer Seite näher an der Öffnung als die Nut (23) des zylindrischen Abschnitts (21) fixiert ist.

5. Energiespeichervorrichtung (1) nach einem der Ansprüche 1 bis 4, wobei
der Brückenabschnitt (50c) eine geringere Fläche eines Querschnitts senkrecht zu der axialen Richtung als der erste Verbindungsabschnitt (50a) und der zweite Verbindungsabschnitt (50b) aufweist.

6. Energiespeichervorrichtung (1) nach Anspruch 5, wobei
der Brückenabschnitt (50c) dünner ist als der erste Verbindungsabschnitt (50a) und der zweite Verbindungsabschnitt (50b).

7. Energiespeichervorrichtung (1) nach Anspruch 5, wobei
der Brückenabschnitt (50c) eine Abmessung in einer Breitenrichtung aufweist, die sich von dem zweiten Verbindungsabschnitt (50b) zum ersten Verbindungsabschnitt (50a) in der axialen Richtung verringert.

8. Energiespeichervorrichtung (1) nach einem der Ansprüche 1 bis 7, wobei
der Brückenabschnitt (50c) in einem Fall durchschmilzt, bei dem ein hoher Strom fließt.

9. Energiespeichervorrichtung (1) nach einem der Ansprüche 1 bis 7, wobei
der erste Verbindungsabschnitt (50a) oder der zweite Verbindungsabschnitt (50b) einen Vorsprung aufweist, der sich zu dem anderen Verbindungsabschnitt erstreckt, wobei eine Spitze davon von dem anderen Verbindungsabschnitt in der axialen Richtung getrennt ist, und
der Vorsprung den Brückenabschnitt (50c) in einer Umfangsrichtung des äußeren Bechers (20) überlappt.

10. Energiespeichervorrichtung (1) nach Anspruch 9, wobei
der Brückenabschnitt (50c) in einem Fall durchschmilzt, bei dem ein hoher Strom fließt.

## Revendications

1. Dispositif de stockage d'énergie (1) comprenant :
un ensemble d'électrodes (10) comprenant une première électrode et une deuxième électrode ;
un boîtier extérieur (20) comprenant une portion cylindrique (21), une portion de fond (22) qui est formée à une extrémité de la portion cylindrique (21) dans une direction axiale, et une ouverture formée à l'autre extrémité de la portion cylindrique (21) dans la direction axiale, le boîtier extérieur (20) recevant l'ensemble d'électrodes (10),
un ensemble d'étanchéité (30) fermant l'ouverture, et
une borne d'électrode (50) connectée électriquement au boîtier extérieur (20), dans lequel
une rainure annulaire (23) positionnée entre l'ensemble d'électrodes (10) et l'ensemble d'étanchéité (30) est formée sur une surface circonférentielle extérieure de la portion cylindrique (21),
**caractérisé par le fait que**
la borne d'électrode (50) comprend, sur une surface extérieure du boîtier extérieur (20), une première portion de connexion (50a) reliée à un côté plus proche de la portion de fond (22) que la rainure (23), une deuxième portion de connexion (50b) positionnée sur un côté plus proche de l'ouverture que la rainure (23), et une portion de pont (50c) reliant la première portion de connexion (50a) et la deuxième portion de connexion (50b) l'une à l'autre, et
la rainure (23) est configurée pour s'élargir dans la direction axiale dû à une expansion du boîtier extérieur (20) de sorte que la portion de pont (50c) est rompue pour couper un courant entre la première portion de connexion (50a) et la deuxième portion de connexion (50b).

2. Dispositif de stockage d'énergie (1) selon la revendication 1, dans lequel
la deuxième portion de connexion (50b) comprend une paroi latérale (50e) qui est reliée à la portion de pont (50c) à une extrémité de celle-ci et s'étend dans la direction axiale, et une paroi d'extrémité (50c) qui est reliée à l'autre extrémité de la paroi latérale (50e) et s'étend dans une direction du diamètre vers l'intérieur de l'ensemble d'étanchéité (30), et
la paroi d'extrémité (50c) recouvre une surface d'extrémité du dispositif de stockage d'énergie (1) dans la direction axiale.

3. Dispositif de stockage d'énergie (1) selon la revendication 2, dans lequel
la paroi latérale (50e) présente une forme cylindrique, et
la paroi d'extrémité (50c) est un disque annulaire.

4. Dispositif de stockage d'énergie (1) selon la revendication 1, dans lequel
un élément isolant (52) est interposé entre la deuxième portion de connexion (50b) et le boîtier extérieur (20), et
la deuxième portion de connexion (50b) est fixée, via l'élément isolant (52), à un côté plus proche de l'ouverture que la rainure (23) de la portion cylindrique (21).

5. Dispositif de stockage d'énergie (1) selon l'une quelconque des revendications 1 à 4, dans lequel
la portion de pont (50c) présente une aire d'une section transversale perpendiculaire à la direction axiale, qui est plus petite que la première portion de connexion (50a) et la deuxième portion de connexion (50b).

6. Dispositif de stockage d'énergie (1) selon la revendication 5, dans lequel
la portion de pont (50c) est plus mince que la première portion de connexion (50a) et la deuxième portion de connexion (50b).

7. Dispositif de stockage d'énergie (1) selon la revendication 5, dans lequel
la portion de pont (50c) présente une dimension dans une direction de largeur qui diminue de la deuxième portion de connexion (50b) vers la première portion de connexion (50a) dans la direction axiale.

8. Dispositif de stockage d'énergie (1) selon l'une quelconque des revendications 1 à 7, dans lequel
il y a fusion de la portion de pont (50c) dans un cas où circule un courant important.

9. Dispositif de stockage d'énergie (1) selon l'une quelconque des revendications 1 à 7, dans lequel
la première portion de connexion (50a) ou la deuxième portion de connexion (50b) présente une saillie s'étendant vers l'autre portion de connexion, une pointe de celle-ci étant séparée de l'autre portion de connexion dans la direction axiale, et
la saillie chevauche la portion de pont (50c) dans une direction circonférentielle du boîtier extérieur (20).

10. Dispositif de stockage d'énergie (1) selon la revendication 9, dans lequel il y a fusion de la portion de pont (50c) dans un cas où circule un courant important.
